(19) Europäisches Patentamt
European Patent Office
Office européen des brevets

(11) Publication number: 0 114 879
B1

(12) # EUROPEAN PATENT SPECIFICATION

(45) Date of publication of patent specification: 11.02.87

(51) Int. Cl.⁴: C 08 K 5/16, C 08 K 5/10

(21) Application number: 83902609.3

(22) Date of filing: 19.07.83

(86) International application number:
PCT/US83/01106

(87) International publication number:
WO 84/00553 16.02.84 Gazette 84/05

(54) **USE OF OLEFIN POLYMER BARRIER FILMS.**

(30) Priority: 26.07.82 US 401590

(43) Date of publication of application:
08.08.84 Bulletin 84/32

(45) Publication of the grant of the patent:
11.02.87 Bulletin 87/07

(84) Designated Contracting States:
BE DE FR NL

(56) References cited:
DE-B-2 345 006
FR-A-2 299 361
GB-A- 792 009
JP-B-43 013 372
US-A-2 765 293
US-A-2 938 879
US-A-3 176 021
US-A-3 441 552
US-A-3 562 291
US-A-3 645 822
US-A-3 828 471
US-A-3 875 069
US-A-3 975 326
US-A-4 214 054

(73) Proprietor: THE DOW CHEMICAL COMPANY
2030 Dow Center Abbott Road P.O. Box 1967
Midland, MI 48640 (US)

(72) Inventor: WONG, Nang, C.
386E Warwick
Fresno, CA 93710 (US)

(74) Representative: Hann, Michael, Dr. et al
Patentanwälte Dr. Michael Hann Dr. H.-G.
Sternagel Sander Aue 30
D-5060 Bergisch Gladbach 2 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to methods of confining chemical treatment agents to areas of application and adjacent areas desired to be treated. These methods utilize for such purposes an olefin polymer film. It has been found that the addition of certain derivatives of fatty acids and/or amines to olefin polymer films reduces the permeability of said film. Olefin polymer films comprising a derivative compound of a fatty acid and/or an amine have been found to be very suitable for confining chemical treatment agents.

Olefin polymer films containing various types of additives are generally known in the art. One problem, however, observed in the films currently known is in achieving desired combinations of resin cost, polymer processability, film strength and film barrier ability. This problem is particularly acute in the area of films used for confinement of chemical treatment agents, and especially soil treatment tarpaulins or soil covering materials. For these and similar uses, large amounts of film are used to confine chemical treatment agents to the area where they are applied and are desired and expected to treat. The chemical treatment agents used, which are often very volatile gases, tend to diffuse, wash, dissolve or blow away unless prevented from doing so. The rapid loss or escape of these treating chemicals can be undesirable for several reasons. For example, (1) the chemicals may be hazardous or toxic in some way, (2) the desired treating effects may not be achieved, and/or (3) large amounts of chemical may be required to achieve the desired effects. The problem of finding a film suitable for use as a chemical treating agent confinement film is further complicated by the fact that during usage such films are subjected to conditions and treated in a manner that punctures and tears in such films tend to occur.

The films currently used to confine chemical treatment agents and as soil treatment tarpaulins or soil covering materials are most commonly low density polyethylene films approximately 25.4 μm (1 mil) thick. Due primarily to their ability to resist puncturing and their ability to resist tear propagation should the film become punctured, these films are fairly well-suited for this usage. The main problem with these films, especially when used with volatile gaseous soil fumigation compounds such as methyl bromide (MeBr) and chloropicrin, is the permeation of the volatile gases through the film and out into the atmosphere. These soil fumigation substances escaping into the atmosphere, depending on their composition, can then present various types of environmental hazards.

This loss of fumigant due to diffusion, unless prevented by using thicker, more expensive films, requires the application of larger doses of fumigant at a greater expense to ensure that a sufficient amount of the substance remains in the soil to achieve the desired soil treatment effects.

It is also known in the art that fatty acid amides can be added to olefin polymer films in small amounts (i.e., 0.5 percent by weight or less for non-filled films) as slip or anti-block agents making such films easier to handle and use. See, for example, U.S. Patents 3,330,796; 3,645,822; 3,562,291; 2,770,608; 2,938,879 and 3,176,021.

FR—A—2 299 361 teaches a film obtained from a mixture of a film-forming polymer such as polyethylene or copolymer of ethylene-vinylacetate and of a monooleate of sorbitan and of a liquid paraffin. This film is used as packing material especially for articles of food.

It is an object of this invention to provide a method of confining a chemical treatment agent to areas of application and adjacent areas desired to be treated, which method uses for such confinement purposes olefin polymer films having good barrier abilities along with other desirable physical properties.

According to the present invention there is provided a method of confining a volatile gaseous soil fumigation compound to areas of application and adjacent areas desired to be treated, which method utilizes for such purposes an olefin polymer film selected from the group consisting of polypropylene, low density polyethylene ("LDPE"), linear low density polyethylene ("LLDPE"), blends of LDPE with LLDPE, blends of high density polyethylene ("HDPE") with LLDPE and blends of LLDPE with HDPE and LDPE, the olefin polymer film comprising a derivative compound of a fatty acid and/or an amine and being characterized in that said derivative compound is a derivative compound of a fatty acid having from 6 to 24 carbon atoms including the carboxy group carbon and being selected from fatty acid monoamides, fatty acid bisamides and fatty acid esters of polyols, and amines represented by the formula

$$R_1—N—R_2$$
$$\quad\quad\diagdown$$
$$\quad\quad\quad R_3$$

wherein $R_1$ is an alkyl or alkenyl group having from 10 to 24 carbon atoms and $R_2$ and $R_3$ are independently a hydrogen atom, an alkyl group having from 1 to 24 carbon atoms, or a substituent containing a group of the formula $-(R_4O)_m-$, wherein $R_4$ is an alkylene group having from 1 to 5 carbon atoms and m is an integer from 1 to 10, said derivative compound of a fatty acid and/or an amine being present in said olefin polymer film in an amount greater than 0.5 up to 5 percent by weight based on the total weight of olefin polymer, filler/pigment (if any) and derivative compound of fatty acid and/or amine in the olefin polymer film.

In a preferred aspect of the present invention, the fatty acid derivative compound is a fatty acid monoamide such as stearamide.

In general, olefin polymer resins suitable for producing films according to the present invention are

well known in the art and include polymer resins containg polymerized therein a major amount of ethylene or propylene. As used herein the terms polyethylene and polypropylene refer to polymers having polymerized therein at least 50 percent by weight ethylene or propylene, respectively, preferably at least 70 percent by weight.

Films prepared from the various polyethylene resins are especially preferred in the practice of the present invention. Films made from low density polyethylene (LDPE) can be very advantageously modified according to the present invention to provide desirable barrier films. Films of linear low density polyethylene (LLDPE) (polymers of ethylene and up to about 20 percent by weight of one or more α-olefins having from 3 to 25 carbon atoms) or blends of LLDPE with high density polyethylene (HDPE) and/or with LDPE provide very desirable barrier films due to superior barrier ability and very good toughness.

The polymer(s) may include minor amounts of additional, copolymerizable monomers polymerized therein, in addition to the ethylene, the propylene, or in the case of LLDPE, the ethylene and copolymerized α-olefin monomer(s) having from 3 to 25 carbon atoms.

In the present invention one or more permeability reducing derivatives of fatty acids and/or amines are used to improve the barrier ability of olefin polymer films which are used to contain gaseous chemical treatment agents. The fatty acids, from which derivatives suitable for the practice of the present invention are prepared, are carboxylic acids generally composed of a chain of from 6 to 24 carbon atoms (including the carboxyl group carbon). The derivatives used according to this invention are monoamides, bisamides, amines and esters of polyhydric alcohols (polyols). The preferred groups of fatty acid derivatives from which permeability reducing compound or compounds can be selected can be represented by the following Formulas I through IV.

I. Monoamides

It has been found that monoamides according to the following formula can improve the barrier ability of olefin polymer films:

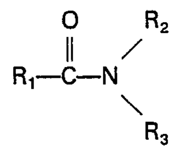

(Formula I)

wherein $R_1$ is an alkyl or alkenyl group having from 5 to 23 carbon atoms, preferably from 8 to 20 carbon atoms, $R_2$ and $R_3$ are independently a hydrogen atom, an alkyl group having from 1 to 24 carbon atoms, an alkenyl group having from 2 to 24 carbon atoms or an acyl group having from 10 to 24 carbon atoms. Preferably $R_2$ and $R_3$ are hydrogen atoms. Monoamides are a particularly preferred group of fatty acid derivatives based on their cost, availability and effectiveness. Exemplary monoamides include stearamide, oleamide, and stearyl stearamide. For a further listing of some of the saturated fatty acid amides represented by this formula see U.S. Patent 4,214,054.

In the above formula and those that follow, it is understood that the various hydrocarbon R-groups can be inertly substituted and that such substitutions do not take the fatty acid derivative compounds outside the scope of the present invention. As used herein the term "inertly substituted" means substitutions or substituent groups comprising atoms other than carbon or hydrogen which substitutions or substituent groups do not cause the inertly substituted fatty acid derivative compound to be detrimentally affected by film-producing temperatures and conditions nor do such substitutions or substituent groups otherwise cause the fatty acid derivative compounds to deleteriously effect the olefin polymer film although they might, in fact, improve the barrier or other properties of the film.

One group of monoamides from which the permeability modifying compounds(s) can be selected is the group of saturated fatty acid amides which can be represented by the formula:

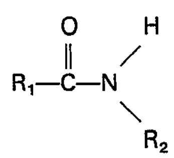

(Formula I-A)

in which formula $R_1$ is an alkyl group having from 9 to 23 carbon atoms, and $R_2$ is independently either a hydrogen atom or an alkyl group having from 1 to 24 carbon atoms.

Amides according to the above Formula I-A are exemplified by, but not limited to, stearyl stearamide and stearamide. Saturated amides suitable for the practice of the present invention, such as stearyl stearamide and stearamide, are, in general, commercially available. For example, stearamide sold under the trade name Kemamide® S and stearyl stearamide sold under the trade name Kemamide® S-180, are commercially available from the Humko Chemical Division of Witco Chemical Corporation, Memphis, Tennessee.

II. Bisamides

Bisamides selected from the group of compounds represented by the following Formulas II and II-A can also improve the barrier ability of olefin polymer films.

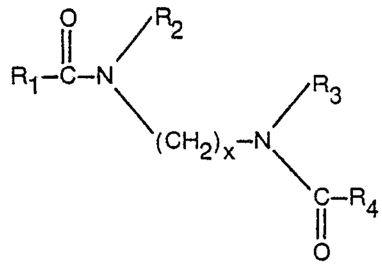

(Formula II)

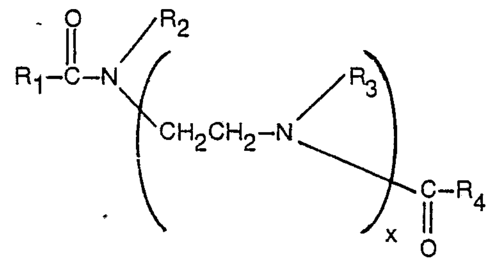

(Formula II—A)

wherein $R_1$ and $R_4$ are independently either an alkyl or alkenyl group having from 5 to 23 carbon atoms, $R_2$ and $R_3$ are independently either a hydrogen atom, an alkyl group having from 1 to 24 carbon atoms or an acyl group having from 10 to 24 carbon atoms, and X is an integer from 1 to 6.

Examples of some fatty acid bisamides, include N,N′-ethylene bislauramide, N,N′-ethylene bisstearamide and the like.

III. Amines

According to the present invention amines selected from the group of compounds represented by the following formula can be used to improve the barrier ability of olefin polymer films

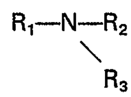

(Formula III)

wherein $R_1$ is an alkyl or alkenyl group having from 10 to 24 carbon atoms and $R_2$ and $R_3$ are independently a hydrogen atom, an alkyl group having from 1 to 24 carbon atoms, or a substituent containing a group of the formula $-(R_4O)_m-$, wherein $R_4$ is an alkylene group having from 1 to 5 carbon atoms and m is an integer from 1 to 10.

Amines suitable for the practice of the present invention are generally known and commercially available. Exemplary amines include stearamine and many others. See U.S. Patent 4,214,054 for a further listing of saturated amines.

IV. Fatty Acid Esters of Polyols

It has also been found that partial and complete fatty acid esters of polyols (polyhydric alcohols) selected from the group of compounds represented by the following formula can be used to improve the barrier ability of olefin polymer films.

$$[R_1 -\!(OR_2]_k O -\!)_l Z \qquad \text{(Formula IV)}$$

wherein Z is the residue of a polyhydric alcohol having l hydroxy groups with l being an integer of from 2 to 8, $R_1$ is independently an acyl group having from 9 to 23 carbon atoms or hydrogen wherein the number of hydrogen $R_1$ groups is from 0 to l-1, $R_2$ is an alkylene group having from 1 to 5 carbon atoms, and k is an integer from 0 to 7.

Examples of such compounds include glycerol monostearate and sorbitan monostearate and the like. For a further listing of such fatty acid esters of polyols see U.S. Patents 4,214,054 and U.S. 3,644,230.

Though not intending to limit the scope of the invention, it is theorized that the described compounds(s) migrate to the surface of the olefin polymer film to create a thin layer which serves as the

barrier to permeating or diffusing gases. Therefore, according to the present invention, enough of the selected compound or compounds which is sufficient to create this layer is added to the olefin polymer, greater amounts not further improving barrier ability noticeably.

It has been found that amounts of the above-described fatty acid derivative compounds and/or amines up to 5 percent by weight based on the total weight of the olefin polymer plus selected compound(s) continue to improve the barrier ability of such polymer films. It is, however, known in the art to use up to 0.5 percent by weight of some fatty acid monoamide compounds as slip and/or anti-block agents in polyethylene and polypropylene films not containing fillers or pigments. It is also known to use up to 1.25 percent by weight of some fatty acid monoamide compounds in polyethylene films (up to 2 percent by weight in polylpropylene films as slip and/or anti-block agents when the films contain filler and/or pigments. Therefore, the presently claimed films involve (a) the use of greater than 0.5 percent by weight fatty acid monoamide in films of polyethylene and polypropylene containing essentially no filler or pigment, (b) the use of greater than 1.25 percent by weight fatty acid monoamide in polyethylene films containing a filler or pigment, (c) the use of greater than 2 percent by weight fatty acid monoamide in polypropylene films containing a filler or pigment and (d) the use of a permeability reducing amount of the other types of fatty acid derivative compounds and/or amine(s) in polyethylene or polypropylene films with or without a filler and/or pigment. The above and following weight percentages are based on the total weight of (a) olefin polymer, (b) filler/pigment (if any) and (c) fatty acid derivative compound in the olefin polymer films.

It has been found preferable in polyethylene films containing essentially no filler or pigment to use greater than 0.5 percent by weight of fatty acid derivative compound(s) and/or amine(s), more preferble to use greater than 1 percent by weight and most preferable to use greater than 1.25 percent by weight. In polypropylene films containing essentially no filler or pigment it is desirable to use greater than 0.5 percent by weight of fatty acid derivative compound(s) and/or amine(s), more desirable to use greater than 1 percent by weight and most desirable to use greater than 2 percent by weight.

While olefin polymer films pursuant to the present invention containing more than 5 percent by weight fatty acid derivative compound and/or amine have reduced permeability to the diffusion of gases such as MeBr, adding amounts greater than 5 percent by weight does not improve the barrier ability of the film substantially. Amounts greater than 5 percent by weight, however, can cause the resin/modifier mixture to be hard to process and to be formed into a film, especially by blown film techniques. Therefore, it is desirable to use amounts of fatty acid derivative compound(s) and/or amine(s) of 5 percent by weight or less in olefin polymer films and more desirable, especially in the case of polyethylene films, to use 2 percent by weight or less.

In the present invention the films are viewed as comprising the olefin polymer resin and an additive package. As used herein, "additive" describes (a) the amount and type of fatty acid derivative compound(s) and/or amine(s) and (b) whether or not the film contains a filler and/or pigment. In general, a film is deemed to contain a filler if there is present in the film more than 10 percent by weight of the filler, and is deemed to contain a pigment if there is present in the film more than 1.0 percent by weight of the pigment compound(s). The term "filler" and "pigment" are well known in the art and include materials such as carbon black, titanium dioxide, calcium carbonate, mica and the like.

It has been found that the fatty acid derivative compound(s) and/or amine(s) surprisingly reduce the rate of diffusion of gaseous chemical treatment agents such as MeBr through olefin polymer films by more than 10 percent, oftentimes more than 20 percent and in some cases more than 25 percent, compared to the same olefin polymer film not containing any fatty acid derivative compound and/or amine. The reduction in gaseous chemical treatment agent diffusion, with little or no loss of the physical properties nor increase in film cost allows a reduction in the amount of treatment agent which is required to be applied. This reduction in chemical treatment agent of course results in reduced costs for the overall chemical treatment process as well as other benefits.

The selected compound(s) may be incorporated in the olefin polymer by any of the methods known in the art to be suitable for insuring a uniform mixture of olefin polymer and additive in the final fabricated article. Suitable methods include addition of the compound(s) as a solid, in solution or in the form of a slurry in water or other non-solvent, to the olefin polymer in powder or granule form followed by drying, if necessary, and tumbling. The fatty acid derivative(s) and/or amine(s) may also be incorporated in the olefin polymer by melt blending the ingredients in a conventional apparatus such as by being pumped into an extruder which is used to prepare the films, or by other mixing means which includes, e.g., a Banbury Mixer, heated rolls, a plasticator or a fluted liner extruder. A concentrate of the compound(s) in olefin polymer can be made by one of the aforesaid methods and this, in turn, can be blended with olefin polymer by tumbling or other suitable means. Finally, various combinations of the above methods can be used.

The method and apparatus for producing films suitable for chemical treatment agent confinement usage, from olefin polymer resins are well known in the art. See for example, U.S. Patents 3,976,733 and 4,025,253. Also known are the so-called "mesh" films which are particularly advantageous films for the practice of the present invention and methods and apparatus for producing such mesh-type films. In the production of mesh-type films, differential cooling of the extruded film surface causes ribs or areas of greater thickness that reinforce the film allowing overall film thicknesses to be generally reduced. See for example, U.S. Patent 4,315,963.

Films used according to the present invention can vary in average thickness depending on their intended usage. The films used for confining chemical treatment agents generally have average thicknesses of up to 254 μm (10 mils). Most soil fumigation tarpaulins generally have average thicknesses of less than 127 microns (5 mils) and usually from 19 to 38 microns (0.75 to 1.5 mils).

In addition to the above-described additive packages, films used according to the present invention may also contain various other additives which are known in the art, such as stabilizers and anti-oxidants; as long as such additives are not detrimental to film performance (i.e., toughness and barrier ability). It is sometimes preferable that the films according to the present invention, when used for much film purposes as well as chemical treatment agent confinement, contain only such fillers and pigments that cause the films to be black or dark colored. In this aspect, films containing white-colored pigments or fillers such as titanium dioxide are less preferable but may be useful in controlling soil temperature.

The present invention provides a method of confining a chemical treatment agent to areas of application and adjacent areas desired to be treated, which method utilizes for such confinement purposes olefin polymer film containing one or more of the above-described fatty acid derivative compounds. The olefin polymer film used in this method comprises a permeability-reducing amount of one or more of the above-described compounds, depending on the amount that the inherent barrier ability of the particular olefin polymer needs to be improved to produce a film having the desired amount of barrier ability.

As used herein, the term "chemical treatment agent" generally means any chemical or substance that can be applied to or in any way contacted with a specific area and/or material or organism located in that area for the purpose of achieving various desired effects. By the terms "confining a chemical treatment agent to its areas of application and adjacent areas desired to be treated" it is meant that chemical treatment agents which are volatile, soluble and/or dust-like in nature and, therefore, may tend to diffuse, dissolve and/or blow away, are intended to be prevented or hindered from leaving said area in such manners. The rapid loss or escape of the treating chemicals can be undesirable because (1) the chemicals may be hazardous or toxic in some way, (2) the desired treating effects may not be achieved, and/or (3) larger amounts of chemical may be required to achieve the desired effects.

The films used according to the present invention have been found particularly useful as soil treatment tarpaulins. By "soil treatment" it is generally meant the use of various chemical soil treatment agents, applied to the surface of soil or incorporated into the soil at various depths below the surface for the purpose of achieving various desired effects. Due to the barrier ability of the films and the other good physical properties of olefin polymer films, the present invention has been found particularly useful in confining volatile gaseous chemical soil treatment agents or soil fumigants often used to erradicate or reduce soil-contained pathogens such as bacteria or fungi in order to prepare soil for planting or treat areas for existing diseases or infestations. After these chemicals are injected into or otherwise applied to the soil, the areas so treated are quickly covered by a tarpaulin preventing the escape of the gaseous materials and maintaining a constant effective concentration in the area desired to be treated. Methyl bromide and chloropicrin, for example, are gaseous chemical treatment agents commonly used for these purposes. It is contemplated that other types of gaseous chemical treatment agents are also suitable for use with the films of the present invention.

Another aspect of the present invention involves the above-described method of confining a gaseous chemical treatment agent to enclose buildings or structures that are being treated with a gaseous fumigant. The olefin polymer film may also be useful in situations where the "application of the chemical treatment agent" is a naturally occurring process. In some cases chemical substances may be naturally occurring or created by natural causes in the soil and those substances, due to various beneficial results, are desired to be retained and concentrated in or near the originating area. In such cases, the method of confining a gaseous chemical treatment agent may be advantageously employed to prevent the escape of such substances.

It should also be noted that unlike films not containing fatty acid derivative compound(s), and/or amine(s), films used according to the present invention surprisingly become more resistant to the diffusion therethrough of gaseous chemical treatment agent after undergoing several cycles of heating to about 50°C and cooling to about 30°C. Heating and cooling cycles are typically encountered by fumigation tarps when they are applied outdoors and undergo heating during the day and cooling at night.

## Examples

In the following examples the following resins are used to prepare control and/or example films

| Resin | Density g/cc | Melt Index g/10 min. |
|---|---|---|
| LDPE 1 | 0.9245 | 1.90 |
| LDPE 2 | 0.9220 | 1.15 |
| LDPE 3 | 0.9215 | 2.00 |
| LDPE 4 | 0.92 | 2.3 |
| HDPE | 0.965 | 0.7 |
| LLDPE 1 | 0.917 | 2.3 |
| LLDPE 2 | 0.926 | 2.0 |
| LLDPE 3 | 0.930 | 0.8 |

Example Films 1—4

Monoamide Additives in LDPE

Example films 1 through 4 are made using the amide additives and amounts specified in Table I, below. These additives are dry blended with a low density polyethylene resin LDPE 4. This mixture is then extruded through a 2.54 cm (1 inch) Killion mino-blown film line and film samples 1 through 4 thereby produced. The temperature of the hopper zone into which the mixture is loaded is 21°C (70°F). The barrel temperature ranges from 93 to 177°C (200 to 350°F) with the die being at 177°C (350°F). The die circumference is 5.1 cm (2 inches), the die gap is 0.09 cm (0.035 inch), and the blow up ratio is 2 to 2.5, producing a film 25.4 microns (1 mil) thick. Table I below summarizes the additives and the amounts of such additives employed in the production of example films 1 through 4.

The tables below also summarize the rates at which methyl bromide diffuses through samples of each of the example films. The methyl bromide diffusion rates for the example films are determined by a method which approximates soil treatment conditions. The method is described in an article by M. J. Kolbezen and F. J. Abu-El-Haj published in the "Proceedings of the International Agriculatural Plastics Congress 1977" at pages 476 to 481.

In this method, a 10 cm by 40 cm sample of the film to be tested, is used to divide a small chamber in half. The two separate chamber portions, both at approximately atmospheric pressure, therefore, share the film as a common wall, one chamber simulating the atmosphere between the soil treatment tarpaulin and the soil (known as the "soil side" chamber), the other chamber representing atmospheric conditions above the soil treatment tarpaulin. Into and through the "soil side" chamber is passed a continuous stream of air containing a constant known concentration of methyl bromide. Into and through the other chamber is passed a continuous stream of air containing no methyl bromide, which stream then picks up the methyl bromide that diffuses through the film sample. The amount of diffused methyl bromide is then measured by gas chromatography and the rate of diffusion for the particular film determined or the permeability of the specific resin/modifier combination (independent of film thickness) determined. The diffusion rate is given in milliliters of methyl bromide per hour per square meter of film per milliliter of methyl bromide per liter of air in the atmosphere under the film ($ml/h/m^2/(ml/l)$) at 50°C and standard atmospheric pressure. The permeability is given in milliliters of methyl bromide per hour per square meter of film per µm of film thickness per milliliter of methyl bromide per liter of air in the atmosphere under the film ($ml/h/m^2/\mu m/(ml/l)$) at 50°C and standard atmospheric pressure. The whole apparatus can be maintained at various different temperatures to observe the effect of temperature on the barrier ability of the film.

The average methyl bromide diffusion rate for film having a particular polymer/modifier composition is determined on the basis of tests run on 2 or 3 samples of that particular film. The diffusion rate for each sample is determined at 30°C, the temperature raised to 50°C and the rate determined, the temperature lowered to 30° and the rate determined and so on for 2 or 3 heating/cooling cycles for each sample. The average methyl bromide diffusion rate for each composition for each temperature (30° or 50°) is then calculated based on all the diffusion rates at that temperature for all of the samples of that particular composition.

The temperatures (30°C and 50°C) and the cyclic heating and cooling are used to approximate actual soil treatment tarpaulin usage conditions. It should be noted that the barrier ability of the modified films is observed to improve after each of the heating/cooling cycles.

TABLE I
MONOAMIDE-MODIFIED BARRIER FILMS

| | Example Film No. | | | | |
|---|---|---|---|---|---|
| Amide Additive | Control 1* | 1 | 2 | 3 | 4 |
| Amount[1] | 0 | 1 pph | 2 pph | 1 pph | 2 pph |
| Type | — | Stearamide[2] | Stearamide[2] | Stearyl Stearamide[3] | Stearyl Stearamide[3] |
| Average Methyl Bromide Diffusion Rate in ml $MeBr/h/m^2/(ml/l)$ | | | | | |
| at 30°C | 10.8 | 4.0 | 3.0 | 9.4 | 7.2 |
| at 50°C | 22.2 | 8.3 | 6.0 | 19.3 | 16.2 |
| % Reduction in MeBr Diffusion[4] | | | | | |
| at 30°C | — | 62.8% | 72.5% | 12.7% | 33.1% |
| at 50°C | — | 62.7% | 73.0% | 12.9% | 27.0% |

*Unmodified low density polyethylene, not an example of the present invention.
[1]Amount of amide additive in film composition in parts amide per 100 parts olefin polymer resin.
[2]Kemamide® S brand stearamide.
[3]Kemamide® S-180 brand stearyl stearamide.

[4]$\% \text{ Reduction} = \frac{x - y}{x} \times 100$ where x is the diffusion of unmodified PE and y is the diffusion of modified PE

Example Films 5—8

Monoamide Additives in Polyethylene Blend Films

Tables II and III below summarize the benefits obtainable in using stearamide to modify films made from blends of various olefin polymers.

The ingredients specified below are used to produce 25.4 µm (1 mil) films with a conventional single-layer blown film apparatus. Control Film 2 is a polyethylene film made from a blend of 60 percent by weight LDPE 1 polyethylene resin and 40 percent LLDPE 1. In Examples 5 and 6, a mixture of Kemamide S® brand stearamide (25 percent) and LDPE 3 (75 percent) is added in place of some of the LDPE 1 to produce an amide-modified film having a resin composition similar to that of Control Film 2, with stearamide concentrations of 1 and 2 percent, respectively, based on weight of the blend composition. The tear strengths of Control Film 2, about 6,3 gm/µm (160 gm/mil) in the machine direction and 17,3 gm/µm (440 gm/mil) in the transverse direction, remain about the same in Example Films 5 and 6 after addition of the stearamide. Table II below shows the improvement in barrier ability due to the stearamide.

TABLE II
Monoamide-Modified Barrier Films

| | Control 2* | Example Film No. 5 | Example Film No. 6 |
|---|---|---|---|
| Film Composition | | | |
| Olefin Polymer[1] | 60% LDPE 1<br>40% LLDPE 1 | 59% LDPE 1 & 3<br>40% LLDPE 1 | 58% LDPE 1 & 3<br>40% LLDPE 1 |
| Stearamide Additive[2] | None | 1% | 2% |
| Average Methyl Bromide Permeability in ml/h/$m^2$/μm/(ml/l) (ml/hr/$m^2$/mil/(ml/l)) | | | |
| at 30°C | 0,677 (17.2) | 0,193 (4.9) | 0,130 (3.3) |
| at 50°C | 1,031 (26.2) | 0,30 (7.6) | 0,240 (6.1) |
| % Reduction in MeBr Permeability[3] | | | |
| at 30°C | — | 71.5% | 80.8% |
| at 50°C | — | 71.0% | 76.7% |

* Unmodified olefin polymer film, not an example of the present invention.

[1] Weight percent olefin polymer in film composition based on total weight olefin polymer resins and stearamide modifier.

[2] Weight percent Kemamide S® brand stearamide in film composition based on total weight olefin polymer resins and stearamide modifier.

[3] $$\% \text{ Reduction} = \frac{x - y}{x} \times 100$$

where x is the permeability of unmodified PE and y is the permeability of modified PE

Control Film 3 is a blend of the following amounts of the indicated resins: 10 percent HDPE; 10 percent LDPE 2, 40 percent LLDPE 3, and 40 percent LLDPE 2. Table III, below, shows the improvement in barrier ability when the above-described Kemamide S® mixture is used in place of some of the LDPE 2 to make Examples 7 and 8. The tear strengths of control Film 3, 2,36 g/μm (60 gm/mil) in the machine direction and 28.19 g/μm (716 gm/mil) in the transverse direction remain about the same after the addition of the stearamide.

TABLE III

| | Control 3 | Example Film No. 7 | Example Film No. 8 |
|---|---|---|---|
| **Film Composition** | | | |
| Olefin Polymer[1] | 10% HDPE<br>10% LDPE 2<br>80% LLDPE 2 & 3 | 10% HDPE<br>9% LDPE 2 & 3<br>80% LLDPE 2 & 3 | 10% HDPE<br>8% LDPE 2 & 3<br>80% LLDPE 2 & 3 |
| Stearamide Additive[2] | None | 1% | 2% |
| **Average Methyl Bromide Permeability in ml/h/$m^2$/μm/(ml/l) (ml/hr/$m^2$/mil/(ml/l))** | | | |
| at 30°C | 0.256 (6.5) | 0,240 (6.1) | 0,169 (4.3) |
| at 50°C | 0,449 (11.4) | 0,441 (11.2) | 0,331 (8.4) |
| **% Reduction in MeBr Permeability[3]** | | | |
| at 30°C | — | 6.2% | 33.8% |
| at 50°C | — | 1.8% | 26.3% |

* Unmodified olefin polymer film, not an example of the present invention.

[1] Weight percent olefin polymer in film composition based on total weight olefin polymer resins and stearamide modifier.

[2] Weight percent Kemamide S® brand stearamide in film composition based on total weight olefin polymer resins and stearamide modifier.

[3] $$\% \text{ Reduction} = \frac{x - y}{x} \times 100$$

where x is the permeability of unmodified PE and y is the permeability of modified PE

From Tables I through III above, it is clearly observable that the stearamide and stearyl stearamide improve the barrier ability of olefin polymers at 30 and 50°C. In the practice of the present invention, the additives can be advantageously combined with olefin polymer resins having desirable combinations of cost, processability, and toughness to produce very desirable barrier films. Such films are especially suited for use as soil fumigation traps or soil covering materials.

Examples Films 9—12

Other Fatty Acid Derivative Additives

Example films 9—12 and Control 4 are made from LDPE 4 and contain the fatty acid derivative additives and amounts specified in Table IV below. These films are prepared by a process similar to that used to prepare Example films 1—8 and Controls 1—3 and evaluated in the same manner. As is shown in Table IV below, the specified fatty acid derivative additives also improve the barrier ability of the olefin polymer films to methyl bromide diffusion.

TABLE IV
Additional Fatty Acid Derivative Additives

| | Control 4* | Example Film Number 9 | 10 | 11 | 12 |
|---|---|---|---|---|---|
| Film Gauge | 1.05 | 0.89 | 0.89 | 1.02 | 0.93 |
| Additive (type) | — | Glycerol mono-stearate[2] (partial ester) | Sorbitan mono-stearate[3] (partial ester) | Stearamine[4] (amine) | N,N-ethylene-bis-laur-amide (bis-amide) |
| Amount[1] | 0 | 2 pph | 2 pph | 2 pph | 2 pph |
| Average Methyl Bromide Permeability in Ml MeBr/h/m²/μm/(ml/l) (MlMeBr/hr/m²/mil/(ml/l) | | | | | |
| at 30°C | 0.598 (15.2) | 0.296 (7.0) | 0.272 (6.9) | 0.307 (7.8) | 0.252 (6.4) |
| at 50°C | 0.858 (21.8) | 0.882 (22.4) | 0.642 (16.3) | 0.779 (19.8) | 0.504 (12.8) |
| % Reduction in MeBr Permeability[6] | | | | | |
| at 30°C | — | 53.9% | 54.6% | 48.7% | 57.9% |
| at 50°C | — | 2.8% | 25.2% | 9.2% | 41.3% |

* Not an example of the present invention.
[1] Amount of additive in film composition in parts additive per 100 parts olefin polymer resin.
[2] Aldo® MSD brand glycerol monostearate commercially available from Glyco Chemicals.
[3] Span® 60 brand sorbitan monostearate commercially available from ICI Americas.
[4] Kemamide® 990 brand stearamine commercially available from Humko Chemical.
[5] Kemamide® W—50 brand N,N'-ethylene bislauramide commercially available from Humko Chemical.

[6] $$\% \text{ Reduction} = \frac{x - y}{x} \times 100$$

where x is the permeability of unmodified PE and y is the permeability of modified PE

As can be seen in Table IV above, the addition of the specified compounds improves the barrier ability of the olefin polymer film to the diffusion of MeBr therethrough. This makes such films particularly desirable for use in applications where gaseous fumigants such as MeBr are desired to be retained in an area which is desired to be treated.

As is apparent from the foregoing specification, the present invention is susceptible to being embodied with various alterations and modifications within the scope of the claims. For this reason, it is to be fully understood that all of the foregoing is intended to be merely illustrative and is not to be construed or interpreted or restrictive or otherwise limiting of the present invention excepting as it is set forth and defined in the hereto-appended claims.

## Claims

1. A method of confining a volatile gaseous soil fumigation compound to areas of application and adjacent areas desired to be treated, which method utilizes for such purposes an olefin polymer film selected from the group consisting of polypropylene, low density polyethylene ("LDPE"), linear low density polyethylene (LLDPE"), blends of LDPE with LLDPE, blends of high density polyethylene ("HDPE") with

LLDPE and blends of LLDPE with HDPE and LDPE, the olefin polymer film comprising a derivative compound of a fatty acid and/or an amine and being characterized in that said derivative compound is a derivative compound of a fatty acid having from 6 to 24 carbon atoms including the carboxy group carbon and being selected from fatty acid monoamides, fatty acid bisamides and fatty acid esters of polyols, and amines represented by the formula

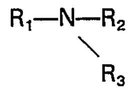

wherein $R_1$ is an alkyl or alkenyl group having from 10 to 24 carbon atoms and $R_2$ and $R_3$ are independently a hydrogen atom, an alkyl group having from 1 to 24 carbon atoms, or a substituent containing a group of the formula $-(R_4O)_m-$, wherein $R_4$ is an alkylene group having from 1 to 5 carbon atoms and m is an integer from 1 to 10, said derivative compound of a fatty acid and/or an amine being present in said olefin polymer film in an amount greater than 0.5 up to 5 percent by weight based on the total weight of olefin polymer, filler/pigment (if any) and derivative compound of fatty acid and/or amine in the olefin polymer film.

2. The method of Claim 1, wherein the fatty acid monoamide compound or compounds are selected from the group of fatty acid monoamide compounds represented by the formula:

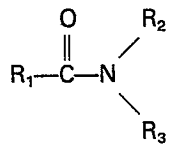

(Formula I)

wherein $R_1$ is an alkyl or alkenyl group having from 5 to 23 carbon atoms, $R_2$ and $R_3$ are independently a hydrogen atom, an alkyl group having from 1 to 24 carbon atoms, an alkenyl group having from 2 to 24 carbon atoms, or an acyl group having from 10 to 24 carbon atoms.

3. The method according to Claim 2 characterized in that the fatty acid monoamide is stearamide.

4. The method according to Claim 2 characterized in that the fatty acid monoamide is stearyl stearamide.

5. The method according to Claim 1 wherein the fatty acid bisamide compound or compounds are represented by the formulas:

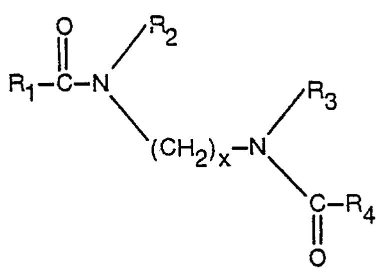

(Formula II)

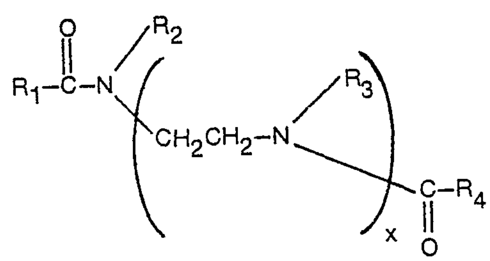

(Formula II–A)

wherein $R_1$ and $R_4$ are independently either an alkyl or alkenyl group having from 5 to 23 carbon atoms, $R_2$ and $R_3$ are independently either a hydrogen atom, an alkyl group having from 1 to 24 carbon atoms, or an acyl group having from 10 to 24 carbon atoms and X is an integer from 1 to 6.

6. The method according to Claim 1 wherein the fatty acid ester of a polyhydric alcohol compound or compounds are represented by the formula:

$$[R_1-(-OR_2]_kO-)_l-Z$$ (Formula IV)

wherein Z is the residue of a polyhydric alcohol having l hydroxyl groups with l being an integer of from 2

to 8, $R_1$ is independently an acyl group having from 9 to 23 carbon atoms, or hydrogen wherein the number of hydrogen $R_1$ groups is from 0 to l—1, $R_2$ is an alkylene group having from 1 to 5 carbon atoms, and k is an integer from 0 to 7.

7. The method according to any one of the preceding claims characterized in that the volatile gaseous soil fumigation compound is applied to soil areas.

8. The method according to any one of the preceding claims, characterized in that the volatile gaseous soil fumigation compound comprises methyl bromide.

9. The method according to any one of the preceding claims, characterized in that the olefin polymer film has a mesh-type structure.

10. The method according to any one of the preceding claims, characterized in that the olefin polymer film comprises from 1 to 2 percent by weight fatty derivative compounds and/or an amine.

**Patentansprüche**

1. Verfahren zum Festhalten einer flüchtigen gasförmigen Bodenbegasungsverbindung auf Anwendungsflächenbereichen und auf den zu den behandelnden Flächen benachbarten Flächen, wobei für diesen Zweck eine Folie aus Polyolefin aus der Gruppe Polypropylen, LD-Polyethylen (LDPE), lineares LD-Polyethylen (LLDPE), Mischungen von LDPE mit LLDPE, Mischungen von HD-Polyethylen (HDPE) mit LLDPE und Mischungen von LLDPE mit HDPE und LDPE verwendet wird und die Polyolefinlolie ein Fettsäurederivat und/oder ein Amin enthält, dadurch gekennzeichnet, daß das Fettsäurederivat ein solches mit einer Fettsäure, die einschließlich der Carboxylgruppe 6 bis 24 C-Atome aufweist, ist, ausgewählt aus Fettsäuremonoamiden, Fettsäurediamiden, Fettsäureresten von Polyolen und die Amine die Formel

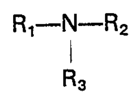

aufweisen, in der $R_1$ ein Alkyl- oder Alkenylrest mit 10 bis 24 C-Atomen ist, und $R_2$ und $R_3$ unabhängig voneinander ein Wasserstoffatom, ein Alkylrest mit 1 bis 24 Kohlenstoffatomen oder ein Substituenten aufweisender Rest der Formel $-(R_4O)_m-$ sind, in der $R_4$ ein Alkenylrest mit 1 bis 5 Kohlenstoff-Atomen und *m* eine Zahl von 1 bis 10 ist, das Fettsäurederivat und/oder ein Amin in der Polyolefinfolie in einer Menge von mehr als 0,5 Gew% bis zu 5 Gew% bezogen auf Gesamtgewicht Polyolefin, Füllstoff/Pigment (ggf.) und Fettsäurederivat und/oder Amin vorhanden ist.

2. Verfahren nach Anspruch 1, dadurch gekennzeichnet, daß das Fettsäuremonoamid oder die Verbindungen aus der Gruppe ausgewählt sind, die der Formel

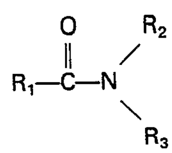

(Formel I)

genügen, in der $R_1$ ein Alkyl- oder Alkenylrest mit 5 bis 23 Kohlenstoffatomen ist, $R_2$ und $R_3$ unabhängig voneinander ein Wasserstoffatom, ein Alkylrest mit 1 bis 24 Kohlenstoffatomen, ein Alkenylrest mit 2 bis 24 Kohlenstoffatomen oder ein Acylrest mit 10 bis 24 Kohlenstoffatomen sind.

3. Verfahren nach Anspruch 2, dadurch gekennzeichnet, daß das Fettsäuremonoamid Stearamid ist.

4. Verfahren nach Anspruch 2, dadurch gekennzeichnet, daß das Fettsäuremonoamid Stearylstearamid ist.

5. Verfahren nach Anspruch 1, dadurch gekennzeichnet, daß das Fettsäurediamid oder die Verbindungen den Formeln

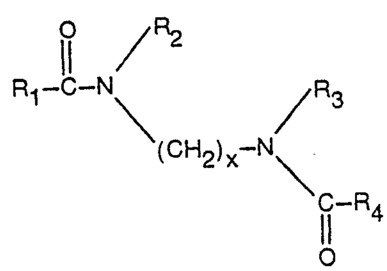

(Formel II)

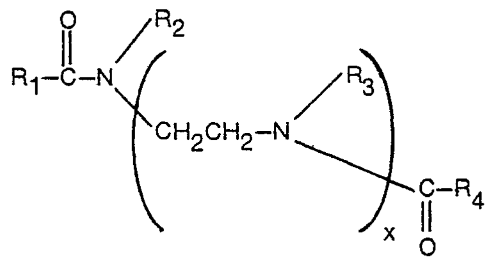

(Formel IIa)

entsprechen, in denen $R_1$ und $R_4$ unabhängig voneinander entweder ein Alkyl- oder ein Alkenylrest mit 5 bis 23 Kohlenstoffatomen sind, $R_2$ und $R_3$ unabhängig voneinander entweder ein Wasserstoffatom, ein Akylrest mit 1 bis 24 Kohlenstoffatomen oder ein Acylrest mit 10 bis 24 Kohlenstoffatomen sind und x eine Zahl von 1 bis 6 ist.

6. Verfahren nach Anspruch 1, dadurch gekennzeichnet, daß der Fettsäureester eines mehrwertigen Alkohols oder der Verbindungen der Formel

$$[R_1 {+} OR_2]_k O {+}_l Z \qquad \text{(Formel IV)}$$

entsprechen, in der Z der Rest des mehrwertigen Alkohols mit 2 Hydroxylgruppen ist, l eine Zahl von 2 bis 8 ist, $R_1$ unabhängig ein Acylrest mit 9 bis 23 Kohlenstoffatomen oder Wasserstoff ist, wobei die Zahl von Wasserstoff, $R_1$-Resten von 0 bis l—1 beträgt, $R_2$ ein Alkylenrest mit 1 bis 5 Kohlenstoffatomen ist und k eine Zahl von 0 bis 7 ist.

7. Verfahren nach jedem der vorstehenden Ansprüche dadurch gekennzeichnet, daß die flüchtige gasförmige Bodenbegasungsverbindung auf Erdbodenflächen aufgebracht wird.

8. Verfahren nach jedem der vorstehenden Ansprüche dadurch gekennzeichnet, daß die flüchtige gasförmige Bodenbegasungsverbindung Methylbromid enthält.

9. Verfahren nach jedem der vorstehenden Ansprüche dadurch gekennzeichnet, daß die Polyolefinfolie ein Gitter ist.

10. Verfahren nach jedem der vorstehenden Ansprüche dadurch gekennzeichnet, daß die Polyolefinfolie von 1 bis 2 Gew% Fettsäurederivate und/oder ein Amin enthält.

**Revendications**

1. Procédé de confinement d'un composé gazeux volatil de fumigation du sol à des zones d'application et aux zones adjacentes que l'on souhaite traiter, lequel procédé utilise à de telles fins un film en polymère d'oléfine choisi parmi le groupe constitué par le polypropylène, le polyéthylène basse densité ("PEBD"), le polyéthylène basse densité linéaire ("PEBDL"), des mélanges de PEBD avec du PEBDL, des mélanges de polyéthylène haute densité ("PEHD") avec du PEBDL, et des mélanges de PEBDL avec du PEHD et du PEBD, le film en polymère d'oléfine comprenant un composé dérivé d'un acide gras et/ou d'une amine, et étant caractérisé en ce que ledit composé dérivé est un composé dérivé d'un acide gras ayant de 6 à 24 atomes de carbone y compris le carbone du groupe carboxyle et choisi parmi les monoamides d'acide gras, les bisamides d'acide gras et les esters d'acide gras des polyalcools, et les amines représentées par la formule

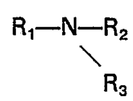

dans laquelle $R_1$ est un radical alcoyle ou alcoylène ayant de 10 à 24 atomes de carbone et $R_2$ et $R_3$ sont séparément un atome d'hydrogène, un radical alcoyle ayant de 1 à 24 atomes de carbone ou un substituant contenant un radical de formule $\text{-}(R_4O)_m\text{-}$ dans laquelle $R_4$ est un radical alcoylène ayant de 1 à 5 atomes de carbone et m est un nombre entier valant de 1 à 10, ledit composé dérivé d'un acide gras et/ou d'une amine étant présent dans ledit film en polymère d'oléfine dans une proportion supérieure à 0,5 jusqu'à 5 pour cent en poids ramené au poids total de polymère d'oléfine, de charge/pigment (si il y en a) et de composé dérivé d'acide gras et/ou d'amine dans le film en polymère d'oléfine.

2. Procédé de la revendication 1, dans lequel le ou les composés de monoamides d'acides gras sont choisis dans le groupe des composés de monoamides d'acides gras représenté par la formule:

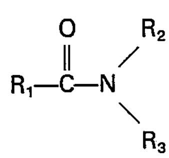

(Formule I)

dans laquelle $R_1$ est un radical alcoyle ou alcoylène ayant de 5 à 23 atomes de carbone, de préférence de 8 à 20 atomes de carbone, $R_2$ et $R_3$ sont indépendamments un atome d'hydrogène, un radical alcoyle ayant de 1 à 24 atomes de carbone, un radical alcoylène ayant de 2 à 24 atomes de carbone ou un radical acyle ayant de 10 à 24 atomes de carbone.

3. Procédé selon la revendication 2, caractérisé en ce que le monoamide d'acides gras est le stéaramide.

4. Procédé selon la revendication 2, caractérisé en ce que le monoamide d'acides gras est le stéaramide de stéaryle.

5. Procédé selon la revendication 1, dans lequel le ou les composés de bisamide d'acides gras sont représentés par les formules:

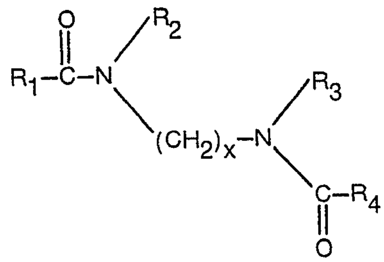

(Formule II)

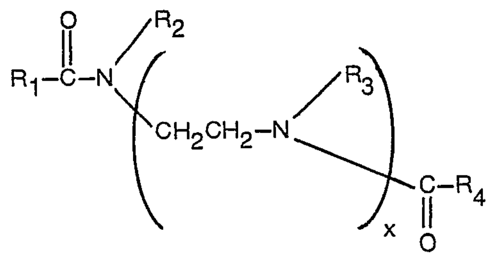

(Formule II-A)

dans lesquelles $R_1$ et $R_4$ sont indépendamment soit un radical alcoyle, soit un radical alcoylène ayant de 5 à 23 atomes de carbone, $R_2$ et $R_3$ sont indépendamment soit un atome d'hydrogène, soit un radical alcoyle ayant de 1 à 24 atomes de carbone, soit un radical acyle ayant de 10 à 24 atomes de carbone, et X est un nombre entier valant de 1 à 6.

6. Procédé selon la revendication 1, dans lequel le ou les composés formés d'un ester d'acide gras d'un alcool polyvalent sont représentés par la formule:

$$[R_1 \mathrel{+\!\!-} OR_2]_k O \mathrel{+\!\!-}_l Z \qquad \text{(Formule IV)}$$

dans laquelle Z est le reste d'un alcool polyvalent présentant l radicaux hydroxyles, l étant un nombre entier valant de 2 à 8, $R_1$ est indépendamment un radical acyle ayant de 9 à 23 atomes de carbone ou de l'hydrogène, le nombre des radicaux $R_1$ formés par de l'hydrogène valant de 0 à l—1, $R_2$ est un radical alcoylène ayant de 1 à 5 atomes de carbone et k est un nombre entier valant de 0 à 7.

7. Procédé selon l'une quelconque des revendications précédentes, caractérisé en ce que le c omposé gazeux volatil de fumigation du sol est appliqué sur des zones du sol.

8. Procédé selon l'une quelconque des revendications précédentes, caractérisé en ce que le composé gazeux volatil de fumigation du sol est constitué par du bromure de méthyle.

9. Procédé selon l'une quelconque des revendications précédentes, caractérisé en ce que le film de polymère d'oléfine présente une structure du type à mailles.

10. Procédé selon l'une quelconque des revendications précédentes, caractérisé en ce que le film polymère oléfine comprend de 1 à 2 pour cent en poids de composés dérivés d'acide gras et/ou d'une amine.